# EUROPEAN PATENT SPECIFICATION

(11) **EP 2 898 780 B1**
(45) Date of publication and mention of the grant of the patent: **17.05.2017**
(21) Application number: 15152353.7
(22) Date of filing: 23.01.2015
(51) Int. Cl.: A23L 5/20, B01J 20/24, C12H 1/052, C12H 1/056

(54) **PURIFICATION MEDIUM**
MEDIUM ZUM REINIGEN
MILIEU DE PURIFICATION

(30) Priority: 23.01.2014 GB 201401171
(43) Date of publication of application: 29.07.2015
(73) Proprietor: Realdyme SA, 28700 Garacières-en-Beauce (FR)
(72) Inventor: Hammond, Peter, Hailey, Oxfordshire OX29 9UB (GB); Vandenburg, Harold, Yarnton, Oxfordshire OX5 1PF (GB)
(74) Representative: Appleyard Lees IP LLP

(56) References cited:
- FR-A1- 2 907 462
- JP-A- 2010 022 254
- US-A1- 2006 263 410
- LUQUE-RODRIGUEZ ET AL: "Dynamic superheated liquid extraction of anthocyanins and other phenolics from red grape skins of winemaking residues", BIORESOURCE TECHNOLOGY, ELSEVIER BV, GB, vol. 98, no. 14, 31 March 2007 (2007-03-31), pages 2705-2713, XP022011409, ISSN: 0960-8524, DOI: 10.1016/J.BIORTECH.2006.09.019

## Description

The present invention relates to a method for the production of a purification medium and the use of said purification medium for purifying a liquid. The invention relates in particular to the removal of toxins from beverages, for example beer and wine.

Fruit and grain used in the production of beverages sometimes become contaminated with undesirable and potentially poisonous substances. This may occur if favourable conditions for the growth of microorganisms prevail during the growth or storage of the fruit or grains. Certain microorganisms produce compounds which are toxic to humans and these toxins may persist during the processing of the fruit or grains into beverages. If the toxins are not removed at some stage during beverage production then the finished beverages will be contaminated with the toxins. Such contaminated beverages present a serious health risk to a consumer of the beverages.

Examples of such microorganism-derived toxins which may cause contamination to beverages are the secondary metabolites of fungi known as mycotoxins. In particular the mycotoxin ochratoxin A (OTA) is a commonly found contaminant in beer and wine. This may be found in the mould that grows on the skin of grapes and on barley. The amount of OTA found in beer and wine can vary greatly, with instances of high contamination having the potential to cause a consumer to exceed the recommended safe limit of daily exposure to the toxin. Therefore there is a need to remove toxins such as OTA from beverages to ensure they are safe for consumers.

Current methods for the removal of OTA and other toxins from beverages include filtering the beverage through an activated carbon filter. However, such filters are expensive and may adversely affect the colour and/or the taste of the beverage. One alternative method for the removal of OTA from beverages involves adsorbing OTA onto insoluble plant fibres. Although more economical and environmentally friendly than using activated filters, this method has a detrimental effect on the taste and colour of the beverages.

JP 2010 022254 A discloses a purification method of an acidic dietary fibre, which makes 100-160°C superheated steam contact the salt of a raw material acidic dietary fibre. Preferably, the raw material acidic dietary fibre is provided to a superheated steam process as a powder, a gel, or a slurry. LUQUE-RODRIGUEZ ET AL: "Dynamic superheated liquid extraction of anthocyanins and other phenolics from red grape skins of winemaking residues", BIORESOURCE TECHNOLOGY, ELSEVIER BV, GB, vol. 98, no. 14, 31 March 2007 (2007-03-31), pages 2705-2713, ISSN: 0960-8524, DOI: 10.1016/J.BIORTECH.2006.09.019 discloses dynamic superheated liquid extraction of anthocyanins and other phenolics from red grape skins of winemaking residues with ethanol-water mixtures. The optimal working conditions for total extraction of anthocyans were: 1:1 ethanol-water acidified with 0.8% HCl, 120°C, 30 min, 1.2 ml/min and 80 bar pressure. US 2006/263410 A1 discloses a biological process for decontaminating mycotoxins in a liquid dietary medium, characterized in that it comprises at least the following steps: adsorbing at least a part of the mycotoxins, which are likely to be present in the liquid dietary medium to be decontaminated, by bringing said medium into contact with micronised insoluble plant fibres, and removing said fibres on which the mycotoxins are absorbed. Preferably, said medium is a beverage.

It is an aim of the present invention to provide a purification medium and a method of purifying a liquid that overcomes some of the disadvantages of the prior art.

According to the first aspect of the present invention there is provided a method of producing a purification medium, the method comprising the steps of:
(a) contacting plant fibres with a superheated fluid; and
(b) processing the plant fibres into a particulate form.

Step (a) involves the treatment of plant fibres. Suitable plant fibres include vegetable fibres and/or cereal fibres. A mixture of fibres may be used. Suitable fibres include wheat bran, buckwheat husks, grape pommace, wood fibre, straw, cotton, hemp, flax, grasses, silk, jute, kenaf, ramie, sisal, kapok, agave, rattan, soy bean, vine, banana, coir, stalk fibre mixtures and by-products thereof.

Especially preferred fibres for use herein include fibres from grape pommace and/or buckwheat husks.

The plant fibres contacted with the superheated fluid in step (a) may be provided in any suitable form. In some embodiments the plant fibres may be chopped, mashed or milled, at least partially, to reduce their size. Partially milled plant fibres which would otherwise be a waste product may be used.

In step (a) the plant fibres are contacted with a superheated fluid.

Suitable superheated fluids include superheated water and superheated alkanols. Suitable superheated alkanols include superheated ethanol. The superheated fluid may comprise a mixture of superheated fluids, for example a mixture of superheated water and a superheated alkanol.

Step (a) may involve a single step of contacting the plant fibres with a superheated fluid. Alternatively, step (a) may involve multiple steps of contacting the plant fibres with a superheated fluid. In embodiments in which more than one step is used, the plant fibres may be contacted with the same or different superheated fluids.

Thus step (a) may involve a single step of contacting the plant fibres with superheated fluid, for example superheated water, a superheated alkanol or a superheated mixture of water and an alkanol.

In some embodiments step (a) may involve more than one step of contacting the plant fibres with a superheated fluid in which the plant fibres are treated with the same superheated fluid in each of the steps.

In some preferred embodiments step (a) involves a step of contacting the plant fibres with a first superheated fluid, and a step of contacting the plant fibres with a second superheated fluid wherein the first and second superheated fluids are different.

In embodiments in which step (a) involves multiple steps of contacting the plant fibres with a superheated fluid, each step may be carried out in the same vessel. Alternatively the steps may be carried out in different vessels.

In some embodiments step (a) comprises a step of contacting the plant fibres with superheated water.

In preferred embodiments step (a) comprises a step of contacting the plant fibres with a superheated alkanol.

In especially preferred embodiments step (a) comprises a step of contacting the plant fibres with superheated water and a step of contacting the plant fibres with a superheated alkanol. The step of contacting the plant fibres with superheated water may be carried out before or after the step of contacting the plant fibres with a superheated alkanol. Preferably the step of contacting the plant fibres with superheated water is carried out before the step of treating the plant fibres with a superheated alkanol.

Preferably the superheated water has a temperature in the range of from 150 °C to 220°C, for example from 165 °C to 185 °C.

Preferably the superheated ethanol has a temperature in the range of from 100 °C to 150 °C, for example from 130 °C to 150 °C.

Suitably the or each step of contacting the plant fibres with a superheated fluid in step (a) is carried out at a pressure greater than ambient pressure. Preferably the or each step of contacting the plant fibres with a superheated fluid in step (a) is carried out at a pressure sufficient to maintain the liquid state of the superheated fluid, for example at a pressure between 5 and 20 bar for example about 10 bar.

In the or each step of contacting the plant fibres with a superheated fluid in step (a), the plant fibres are preferably contacted with the superheated fluid for a period of at least 5 minutes, preferably at least 10 minutes, suitably at least 20 minutes, for example at least 30 minutes.

Suitably in the or each step of contacting the plant fibres with a superheated fluid in step (a), the plant fibres are contacted with the superheated fluid for a period of up to 24 hours, preferably up to 16 hours, suitably up to 8 hours, for example up to 6 hours.

Step (b) involves processing the plant fibres into a particulate form. Processing may involve mechanically processing the plant fibres into a particulate form. Suitable mechanical processes may include milling, crushing, grinding, cutting, blending or pulverising. Step (b) suitably involves reducing the size of the plant fibres. Suitable particulate forms include granules and powder.

In some preferred embodiments, the plant fibre particles obtained following step (b) have an average particle size less than 2 mm, suitably less than 1.5 mm. Suitably the plant fibre particles obtained following step (b) have an average particle size greater than 0.1 mm, suitably greater than 0.3 mm. Suitably the plant fibre particles obtained following step (b) have an average particle size between 0.5 mm and 1 mm.

In some embodiments, the plant fibre particles obtained following step (b) have an average particle size of less than 200 µm, for example less than 100 µm, suitably less than 75 µm. Suitably the plant fibre particles obtained following step (b) have an average particle size greater than 1 µm, for example greater than 5 µm, suitably greater than 10 µm.

In some embodiments, following step (b), 90 % of the plant fibre particles have a particle size less than 700 µm, as measured by sieve analysis. Suitably following step (b), 90 % of the plant fibre particles have a particle size less than 400 µm, as measured by sieve analysis. Suitably following step (b), 90 % of the plant fibre particles have a particle size between 2 and 200 µm, as measured by sieve analysis.

In some embodiments, following step (b), 70 % of the plant fibre particles have a particle size less than 100 µm, as measured by laser diffraction. Suitably following step (b), 90 % of the plant fibre particles have a particle size less than 100 µm, as measured by laser diffraction.

The method of the first aspect may include an optional drying step between steps (a) and (b). Alternatively and/or additionally the method of the first aspect may include an optional drying step after step (b). Suitably the drying step is carried out at a temperature of from 30 to 80 °C, for example at a temperature of from 50 to 70 °C. Drying may be assisted by using reduced pressure. Suitably the drying step is carried out at a temperature of less than 65 °C. Suitably the drying step is carried out at a temperature of less than 60 °C.

The particles obtained by the method of the present invention have been found to have improved properties in terms of removal of ochratoxin A from beverages, for example, wine and beer.

Without wishing to be bound by theory it is believed that the superheated fluid, especially superheated ethanol, assists in the removal of fats from the plant fibres. Theses fats are believed to have a deleterious effect on the taste of a beverage. However the fats may themselves be useful for other purposes. The fats could be recovered from the used superheated fluid if desired.

According to a second aspect of the present invention there is provided a purification medium obtained by the method of the first aspect.

According to a third aspect of the present invention there is provided a method of removing contaminant compounds from a liquid, the method comprising the steps of:
(i) providing a purification medium comprising plant fibres that have been contacted with a superheated fluid; and
(ii) contacting the liquid with the purification medium.

The liquid from which contaminant compounds are removed in the method of the third aspect of the present invention may be a beverage or a liquid used in the production of a beverage. In some embodiments the liquid is beer or a liquid containing grain extracts used in the production of beer. In some embodiments the liquid is wine or a liquid comprising grape extracts used in the production of wine.

The contaminant compounds removed from the liquid may comprise toxins. Suitably the contaminant compounds are mycotoxins. In preferred embodiments the contaminant compounds removed from the liquid comprises ochratoxin A (OTA).

Step (i) involves providing a purification medium. The purification medium is suitably provided by the method of the first aspect. The purification medium is suitably provided in particulate form. Preferably it is provided in powdered form. Preferred features of the purification medium provided in step (i) are as defined in relation to the first and second aspects.

Step (ii) involves contacting the liquid with the purification medium.

This may be carried out by any suitable method and such methods will be known to the person skilled in the art.

Step (ii) may involve using the purification medium to form a filter cake and then passing the liquid through the filter cake. When passing the liquid through the filter cake, contaminant compounds may be adsorbed onto the purification medium and thus retained in the filter cake.

Step (ii) may involve forming a layer comprising the purification medium at the bottom of a vessel or a channel and then passing the liquid through the vessel or channel over the layer comprising the purification medium. When passing the liquid over the layer, contaminant compounds may be adsorbed onto the purification medium.

Step (ii) may involve mixing the purification means with the liquid. The resultant mixture may be left for a period of time to allow the contaminant compounds to be adsorbed onto the purification medium. The mixture may be continuously agitated or the purification medium may be allowed to settle at the bottom of a vessel containing the liquid.

Step (ii) may be repeated. Suitably step (ii) is repeated at least once. Repetition of step (ii) may enable higher quantities of contaminant compounds to be removed.

In some embodiments the method may involve a step of separating the liquid from the purification medium, after step (ii). For example, in embodiments in which the liquid is mixed with the purification medium in step (ii), it may be necessary to remove the purification medium from the mixture, for example by filtration or decanting.

The method of the present invention has been found to be very effective at removing contaminant compounds from liquids, especially beverages, for example wine and beer. The method has been found to be highly selective in that contaminant compounds have been removed without concurrent removal of significant amounts of other desirable compounds, for example compounds which impart colour and/or flavour to a beverage. Furthermore it has not been observed that compounds from the purification medium become dissolved in the liquid. In some prior art methods such compounds have had a deleterious effect on the taste of a beverage.

In preferred embodiments the method of the third aspect of present invention has been found to be highly effective at removing mycotoxins, especially ochratoxin A (OTA) from beverages, especially beer and wine.

The method of the third aspect preferably removes at least 20 wt% of ochratoxin A present in a liquid treated by the method, preferably at least 40 wt%, more preferably at least 60 wt%, preferably at least 70 wt%, more preferably at least 80 wt%, for example at least 90 wt% or at least 95 wt%.

Preferably the taste of a beverage treated by the method of the third aspect does not significantly differ from the taste of the beverage prior to the treatment.

Preferably the colour of a beverage treated by the method of the third aspect of the present invention does not significantly differ from the colour of the beverage prior to the treatment.

By "does not significantly differ" we mean that the skilled person would not detect any difference in the taste or colour of the beverage following treatment.

The invention will now be further described with reference to the following non-limiting examples.

### Example 1

Grape pommace fibres were contacted with superheated water at 175 °C and a pressure of approximately 10 bar for a period of 1-4 hours. The grape pommace was then dried and milled to provide a grape pommace derived purification medium in a fine particulate form.

### Example 2

Grape pommace fibres were contacted with superheated water at 175 °C and a pressure of approximately 10 bar for a period of 1-4 hours. The grape pommace fibres were then contacted with superheated ethanol at 140 °C and a pressure of approximately 10 bar for a period of 1-4 hours. The grape pommace fibres were then dried on trays at 60 °C in an air circulating oven and milled to provide a grape pommace derived purification medium in a fine particulate form.

### Example 3: in vitro decontamination using SHW extracted, micronised grape pommace

A contaminated solution and a fibre were contacted and then the liquid and the fibre were separated by centrifugation. The residual contamination of the liquid was measured and the difference in the toxin level of the original solution and that of the liquid shows the extent of decontamination of the liquid. The results are expressed as the quantity of adsorbent necessary to reduce the toxin level by 50 %.

Comparison testing of a large number of micronised vegetable fibers found that the best available adsorbing product from this set (micronised wheat envelopes) had to be provided at 7 g/l to reduce the mycotoxin level by 50 %. Super heated water extracted micronised grape pommace as prepared by Example 1 reduced mycotoxin level by 50 % when provided at 0.2 g/l, a 97 % reduction in the amount of material required to produce a level of decontamination comparable to that of the micronized wheat envelopes.

### Example 4: Beer filtration

Beer was artificially contaminated with 84.7 µg/l of OTA and filtered with a filter cake of micronised super heated water extracted grape pommace according to the parameters defined in Table 1. The level of OTA in the beer was reduced to 0.14 µg/l, a greater than 99% reduction in the amount of OTA present in the beer. The results on turbidity and yeast content shown in Table 2 fully met the commercial requirements of the brewery.

**Table 1 filtration data: Filtration Parameters**

| | |
|---|---|
| Filter surface | 0.055 m² |
| Specific filtration capacity | 5.45 Hl/h/m² |
| Time of filtration | 2-3 Hours |
| Precoat 1 | 654 g/m² |
| Precoat 2 | 818 g/m² |
| Total Specific Consumption | 430-450 g/Hl |
| Pressure Drop | 0.3-0.4 bar |

**Table 2: Filtration Efficiency**

| | **Before filtration** | **After filtration** |
|---|---|---|
| **Turbidity (EBC)** | 25.24 | 0.26 |
| **Yeast (nb/g)** | 1.56 x 10⁴ | Not Detectable |

The original beer, the filtered beer and the filter cake after filtration were tested for the presence of the pesticides listed in Table 3. As shown in Table 3, the micronised super heated water extracted grape pommace filter aid removed Azoxystrobin from the beer to a degree such that levels were undetectable. The levels of pesticides in the filter cake after filtration were measured and show that Azoxystrobin has been concentrated in the cake. What is remarkable about the results in Table 3 is that pesticides that were neither detected in the original beer nor detected in the filtered beer, were detected in the cake. Tests on the original filter aid confirmed that no pesticides were detectable in the original filter aid itself. The pesticides present in the filter cake after filtration could therefore only have come from the beer.

**Table 3: Pesticide Residue**

| **Pesticide** | **Level in Original Beer (µg/l)** | **Level in Filtered Beer (µg/l)** | **Level in Filter Cake After Filtration (µg/kg)** |
|---|---|---|---|
| **Azoxystrobin** | 1.3 | nd | 38.7 |
| **Metalaxyl-M** | nd | nd | 1.5 |
| **Dimetomorph** | nd | nd | 1.7 |
| **Boscalid** | nd | nd | 2.7 |
| **Myclobutanil** | nd | nd | 2.6 |

### Example 5: Wine Filtration

Wine contaminated with pesticides as part of the standard cultivation process where the grapes had been subjected to over-application of pesticides immediately prior to harvest was combined with a wine selected for OTA natural contamination to give a wine with a residual contamination of OTA of 3.9 µg/l. The wine was filtered with a filter cake of micronised super heated water extracted grape pommace according to the parameters defined in Table 4.

**Table 4: Filtration Parameters**

| | |
|---|---|
| Filter surface | 0.055 m² |
| Specific filtration capacity | 5.45 Hl/h/m² |
| Time of filtration | 2-3 Hours |
| Precoat 1 | 654 g/m² |
| Precoat 2 | 818 g/m² |
| Total Specific Consumption | 500-550 g/Hl |
| Pressure Drop | 0.3-0.7 bar |

The turbidity results in Table 5 show that turbidity (in EBC - European Brewery Convention units) was significantly reduced after filtration.

**Table 5: Filtration Efficiency**

| | **Before filtration** | **After filtration** |
|---|---|---|
| **Turbidity (EBC)** | 1629 | 0.25 |

The decontamination results are shown in Table 6. The OTA level of 3.9 µg/l present in the original wine was reduced to a non-detectable level in the filtered wine. All pesticide contaminations were significantly reduced (by above 90 %) except the Iprovalicarb that was only reduced by 20 %. All the adsorbed pesticides were captured by the filter and found at significant levels in the filter cake.

**Table 6: Filtration Efficiency**

| **Toxin** | **Level in unfiltered wine (µg/l)** | **Level in filtered wine** | **Level in Cake (µg/kg)** |
|---|---|---|---|
| **OTA** | 3.93 | nd | Not Measured |
| **Boscalid** | 8.4 | nd | 27.5 |
| **Dimetomorph** | 25.5 | 1.2 | 69.9 |
| **Fenhexamid** | 43.3 | 4.3 | 144.1 |
| **Iprodione** | 16.8 | nd | 248.0 |
| **Iprovalicarb** | 2.1 | 1.6 | 4.5 |

### Example 6: Sensory Evaluation of Processed Filter Aid

Triangular tests are designed to show whether a treated sample is indistinguishable from an untreated one. The sample of treated wine or hydroalcoholic solution is compared with two untreated samples. The tester is asked to indicate which sample is different. If there is no difference, then the chosen one will be randomly distributed. The degree to which the selection differs from a random one can be used to determine the probability that the treated sample is different.

The test samples were prepared using 2 g of fibre in 100 ml red wine. This is a far higher ratio of fibre to wine than will be encountered during normal use of the fibre as a purification medium.

**Table 7**

| **Fibre** | **Correct Answer** | **Wrong Answer** | **Conclusion** |
|---|---|---|---|
| **Control (Kieselguhr)** | 3 | 11 | Not significant |
| **SHW extracted, no ethanol** | 9 | 1 | Significant |
| **SHW and superheated ethanol** | 14 | 6 | Not significant |
| **SHW and superheated isopropanol** | 14 | 8 | Not significant |

The results in Table 7 show that with superheated water alone, the sample was significantly different from the control. After treatment with superheated water followed by either superheated ethanol or superheated isopropanol, there was no significant difference between the sample and the control. Therefore the wine contacted with fibre treated with super heated water and superheated ethanol had a taste which was not significantly different to wine which was contacted with Kieselguhr (the control).

### Example 7 Superheated Ethanol Extraction

Grape Pommace was loaded into a pressure vessel and extracted with superheated water (SHW) at 180 °C. The material was either dried after SHW extraction, or further extracted with superheated ethanol (SHE) and then dried. The fat content of the samples were determined by Soxhlet extraction after acid hydrolysis and these results are shown in Table 8.

**Table 8**

| **Sample** | **Wt Fibre / g** | **SHW Temp** | **SHW Time** | **Ratio water/fibre** | **SHE temp** | **SHE Time** | **SHE Ratio** | **Fat (%)** | **error %** |
|---|---|---|---|---|---|---|---|---|---|
| **4/GP/104** | 500 | 180 | 2 | 16 | 0 | 0 | 0 | 12.0 | 0.382 |
| **4/GP/106** | 500 | 180 | 2 | 8 | 0 | 0 | 0 | 11.5 | 0.088 |
| **4/GP/108** | 502 | 180 | 4 | 16 | 0 | 0 | 0 | 11.4 | 0.657 |
| **4/GP/110** | 502 | 180 | 2 | 16 | 150 | 2 | 16 | 0.4 | 0.070 |
| **4/GP/111** | 500 | 180 | 2 | 8 | 145 | 1 | 8 | 0.8 | 0.070 |
| **4/GP/112** | 4970 | 180 | 2 | 16 | 143 | 2 | 16 | 0.6 | 0.000 |

Ethanol is not usually a very good solvent for fat extraction, but superheated ethanol extracted nearly all the fat from the SHW extracted samples.

### Eample 8 Laboratory Scale Superheated Solvent Extraction

Samples of grape pommace (approximately 25 g) was placed in a pressure vessel and extracted with a superheated solvent - either ethylacetate (EtOAc) at 100 °C or 110 °C or ethanol (EtOH) at 140 °C. The cell was placed in an oven and the solvent pumped through the cell. The percentage fat extraction values are shown in Table 9.

**Table 9**

| | **% Fat Extracted** | | |
|---|---|---|---|
| **Ratio Solvent / fibre** | **EtOAc 100 °C** | **EtOAc 110 °C** | **EtOH 140 °C** |
| **0** | 0 | | |
| **0.5** | 33.5 | | |
| **2.4** | 71.1 | | |
| **4.3** | 78.7 | | |
| **6.2** | 82.7 | | |
| **8.2** | 84.5 | | |
| **0** | | 0.0 | |
| **2** | | 78.0 | |
| **4** | | 86.2 | |
| **6** | | 90.8 | |
| **0** | | | 0.0 |
| **2** | | | 65.0 |
| **4** | | | 88.4 |
| **6** | | | 95.4 |
| **8** | | | 97.4 |

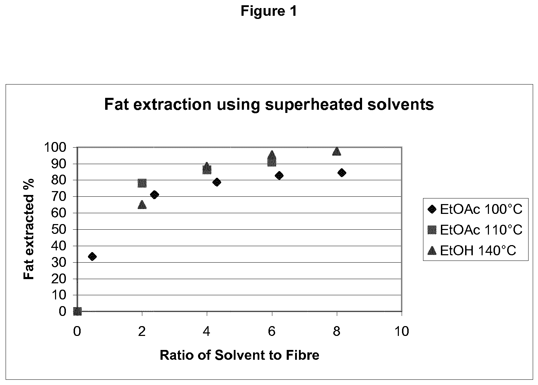

The results in Table 9 show that ethylacetate extracts the fat more efficiently at 110 °C than at 100 °C. Ethanol is usually a poor solvent for fats, but at 140 °C ethanol extracted as efficiently as ethylacetate at 110 °C. With ethanol at 140 °C and ethylacetate at 110 °C extraction reaches 90 % with a solvent to fibre ratio of only 4. Figure 1 shows a plot of the data shown in Table 9.

## Claims

1. A method of producing a purification medium, the method comprising the steps of:
(a) contacting plant fibres with a superheated fluid at a pressure greater than ambient pressure; and
(b) processing the plant fibres into a particulate form;
wherein step (a) comprises a step of contacting the plant fibres with superheated water and a step of contacting the plant fibres with a superheated alkanol; and
wherein the plant fibre particles obtained following step (b) have an average particle size less than 2 mm.

2. The method according to claim 1, wherein the plant fibres are grape pommace and/or buckwheat husks.

3. The method according to claim 1 or claim 2, wherein the superheated alkanol comprises superheated ethanol.

4. The method according to any preceding claim, wherein step (a) involves multiple steps of contacting the plant fibres with a superheated fluid.

5. The method according to claim 4, wherein step (a) comprises a step of contacting the plant fibres with superheated water and a step of contacting the plant fibres with a superheated alkanol.

6. The method according to any preceding claim, wherein step (b) involves reducing the size of the plant fibres.

7. The method according to any preceding claim, wherein the method comprises a drying step between steps (a) and (b).

8. A purification medium obtainable by the method of any preceding claim.

9. A method of removing contaminant compounds from a liquid, the method comprising the steps of:
(i) providing a purification medium comprising plant fibres that have been contacted with a superheated fluid; and
(ii) contacting the liquid with the purification medium;
wherein step (i) comprises the steps of:
(a) contacting plant fibres with a superheated fluid at a pressure greater than ambient pressure; and
(b) processing the plant fibres into a particulate form;
wherein step (a) comprises a step of contacting the plant fibres with superheated water and a step of contacting the plant fibres with a superheated alkanol; and
wherein the plant fibre particles obtained following step (b) have an average particle size less than 2 mm.

10. The method according to claim 9, wherein the liquid is a beverage or a liquid used in the production of a beverage.

11. The method according to any of claims 9 to 10, wherein the contaminant compounds removed from the liquid comprise toxins.

12. The method according to claim 11, wherein the contaminant compounds are mycotoxins.

13. The method according to claim 12, wherein the contaminant compounds removed from the liquid comprises ochratoxin A (OTA).

## Patentansprüche

1. Verfahren zur Herstellung eines Reinigungsmediums, wobei das Verfahren die folgenden Schritte umfasst:
(a) Inkontaktbringen von Pflanzenfasern mit einer überhitzten Flüssigkeit bei einem Druck über dem Umgebungsdruck; und
(b)Verarbeiten der Pflanzenfasern zu einer teilchenförmigen Form;
wobei Schritt (a) einen Schritt des Inkontaktbringens der Pflanzenfasern mit überhitztem Wasser und einen Schritt des Inkontaktbringens der Pflanzenfasern mit einem überhitzten Alkanol umfasst;
wobei die nach Schritt (b) erhaltenen Pflanzenfaserteilchen eine durchschnittliche Teilchengröße von weniger als 2 mm aufweisen.

2. Verfahren nach Anspruch 1, wobei es sich bei den Pflanzenfasern um Traubentrester und/oder Buchweizenschalen handelt.

3. Verfahren nach Anspruch 1 oder Anspruch 2, wobei das überhitzte Alkanol überhitztes Ethanol umfasst.

4. Verfahren nach einem vorhergehenden Anspruch, wobei Schritt (a) mehrfache Schritte des Inkontaktbringens der Pflanzenfasern mit einer überhitzten Flüssigkeit beinhaltet.

5. Verfahren nach Anspruch 4, wobei Schritt (a) einen Schritt des Inkontaktbringens der Pflanzenfasern mit überhitztem Wasser und einen Schritt des Inkontaktbringens der Pflanzenfasern mit einem überhitzten Alkanol umfasst.

6. Verfahren nach einem vorhergehenden Anspruch, wobei Schritt (b) das Vermindern der Größe der Pflanzenfasern beinhaltet.

7. Verfahren nach einem der vorhergehenden Ansprüche, wobei das Verfahren einen Trocknungsschritt zwischen den Schritten (a) und (b) umfasst.

8. Reinigungsmedium, das nach dem Verfahren nach einem vorhergehenden Anspruch erhältlich ist.

9. Verfahren zum Entfernen von verunreinigenden Verbindungen aus einer Flüssigkeit, wobei das Verfahren die folgenden Schritte umfasst:
(i) Bereitstellen eines Reinigungsmediums, das Pflanzenfasern, die mit einer überhitzten Flüssigkeit in Kontakt gebracht worden sind, umfasst; und
(ii) Inkontaktbringen der Flüssigkeit mit dem Reinigungsmedium;
wobei Schritt (i) die folgenden Schritte umfasst:
(a) Inkontaktbringen von Pflanzenfasern mit einer überhitzten Flüssigkeit bei einem Druck über dem Umgebungsdruck; und
(b) Verarbeiten der Pflanzenfasern zu einer teilchenförmigen Form;
wobei Schritt (a) einen Schritt des Inkontaktbringens der Pflanzenfasern mit überhitztem Wasser und einen Schritt des Inkontaktbringens der Pflanzenfasern mit einem überhitzten Alkanol umfasst;
wobei die nach Schritt (b) erhaltenen Pflanzenfaserteilchen eine durchschnittliche Teilchengröße von weniger als 2 mm aufweisen.

10. Verfahren nach Anspruch 9, wobei es sich bei der Flüssigkeit um ein Getränk oder eine in der Herstellung eines Getränks verwendete Flüssigkeit handelt.

11. Verfahren nach einem der Ansprüche 9 bis 10, wobei die von der Flüssigkeit entfernten verunreinigenden Verbindungen Toxine umfassen.

12. Verfahren nach Anspruch 11, wobei es sich bei den verunreinigenden Verbindungen um Mykotoxine handelt.

13. Verfahren nach Anspruch 12, wobei die von der Flüssigkeit entfernten verunreinigenden Verbindungen Ochratoxin A (OTA) umfassen.

## Revendications

1. Méthode de production d'un milieu de purification, la méthode comprenant les étapes :
(a) de mise en contact de fibres végétales avec un fluide surchauffé à une pression supérieure à la pression ambiante ; et
(b) de transformation des fibres végétales en une forme particulaire ;
dans laquelle l'étape (a) comprend une étape de mise en contact des fibres végétales avec de l'eau surchauffée et une étape de mise en contact des fibres végétales avec un alcanol surchauffé ; et
où les particules de fibres végétales obtenues après l'étape (b) possèdent une taille de particules moyenne inférieure à 2 mm.

2. Méthode selon la revendication 1, dans laquelle les fibres végétales sont du marc de raisin et/ou des balles de sarrasin.

3. Méthode selon la revendication 1 ou la revendication 2, dans laquelle l'alcanol surchauffé comprend de l'éthanol surchauffé.

4. Méthode selon l'une quelconque des revendications précédentes, dans laquelle l'étape (a) met en jeu des étapes multiples de mise en contact des fibres végétales avec un fluide surchauffé.

5. Méthode selon la revendication 4, dans laquelle l'étape (a) comprend une étape de mise en contact des fibres végétales avec de l'eau surchauffée et une étape de mise en contact des fibres végétales avec un alcanol surchauffé.

6. Méthode selon l'une quelconque des revendications précédentes, dans laquelle l'étape (b) met en jeu la réduction de la taille des fibres végétales.

7. Méthode selon l'une quelconque des revendications précédentes, où la méthode comprend une étape de séchage entre les étapes (a) et (b).

8. Milieu de purification pouvant être obtenu par la méthode selon l'une quelconque des revendications précédentes.

9. Méthode d'élimination de composés de contamination à partir d'un liquide, la méthode comprenant les étapes :
(i) de fourniture d'un milieu de purification comprenant des fibres végétales ayant été mises en contact avec un fluide surchauffé ; et
(ii) de mise en contact du liquide avec le milieu de purification ;
dans laquelle l'étape (i) comprend les étapes :
(a) de mise en contact de fibres végétales avec un fluide surchauffé à une pression supérieure à la pression ambiante ; et
(b) de transformation des fibres végétales en une forme particulaire ;
où l'étape (a) comprend une étape de mise en contact des fibres végétales avec de l'eau surchauffée et une étape de mise en contact des fibres végétales avec un alcanol surchauffé ; et
où les particules de fibres végétales obtenues après l'étape (b) possèdent une taille de particules moyenne inférieure à 2 mm.

10. Méthode selon la revendication 9, dans laquelle le liquide est une boisson ou un liquide utilisé dans la production d'une boisson.

11. Méthode selon l'une quelconque des revendications 9 à 10, dans laquelle les composés de contamination éliminés du liquide comprennent des toxines.

12. Méthode selon la revendication 11, dans laquelle les composés de contamination sont des mycotoxines.

13. Méthode selon la revendication 12, dans laquelle les composés de contamination éliminés du liquide comprennent de l'ochratoxine A (OTA).
